# NEW EUROPEAN PATENT SPECIFICATION

(11) **EP 2 000 781 B2**
(45) Date of publication and mention of the opposition decision: **13.03.2013**
(45) Mention of the grant of the patent: 05.08.2009
(21) Application number: 07425348.5
(22) Date of filing: 04.06.2007
(51) Int. Cl.: G01D 5/14, B29C 45/00, F02D 9/10, G01P 3/487, H01F 1/42, F16K 1/22

(54) **A manufacturing method of a shaft provided with a magnet for an air flow rate adjustment valve in an internal combustion engine**
Welle mit Magnet für ein durchflussregelendes Ventil eines Verbrennungsmotors
Arbre ayant un aimant pour une soupape de réglagle du dédit d'air dans un moteur à combustion interne

(43) Date of publication of application: 10.12.2008
(73) Proprietor: Magneti Marelli S.p.A., Corbetta (MI) (IT)
(72) Inventor: Colli, Marcello, 42100 Reggio Emilia (IT); Signorelli, Giorgio, 42100 Reggio Emilia (IT); Piciotti, Roberto, 40139 Bologna (IT); Bellato, Nazario, 40131 Bologna (IT)
(74) Representative: Jorio, Paolo

(56) References cited:
- EP-A2- 1 028 239
- EP-B1- 1 281 847
- DE-A1-102004 020 734
- FR-A1- 2 583 514
- US-A- 4 364 011
- US-A- 5 427 514
- US-A1- 2001 002 599
- US-A1- 2005 028 871

## Description

### TECHNICAL FIELD

The present invention relates to a manufacturing method of a shaft provided with a magnet for an air flow rate adjustment valve in an internal combustion engine.

The present invention finds advantageous application in a butterfly valve shaft, to which explicit reference will be made in the description below without because of this loosing in generality.

### BACKGROUND ART

A butterfly valve, which is arranged upstream of an intake manifold and adjusts the flow rate of the air which is fed to the cylinders, is contemplated in gasoline-fed internal combustion engines. A known butterfly valve presents a valve body, in which a valve seat is obtained, engaged by a butterfly valve plate, which is keyed onto a rotational shaft to turn between an opening position and a closing position by effect of the action of an electric motor coupled to the shaft itself by means of a geared drive.

A position sensor, which is adapted to detect the angular position of the shaft (i.e. of the butterfly valve plate), is coupled to one end of the butterfly valve plate supporting shaft to allow a control unit to feedback-control the electric motor. In modern butterfly valves, the position sensor is of the contactless type and consists of a rotor which is fitted onto one end of the butterfly valve plate supporting shaft and a stator, which in use faces the rotor to detect the angular position of the rotor itself. Typically, the electric motor, the geared drive and the position sensor are accommodated within a valve body housing chamber, which housing chamber is closed by a removable lid which often supports the stator of the position sensor.

In case of a position sensor of the magnetic type, the rotor consist of a magnet, generally circular, which is fixed onto one end of the butterfly valve plate supporting shaft. Currently, such magnet which constitutes the position sensor rotor is fixed to one end of the butterfly valve plate supporting shaft by gluing or by co-molding; however, such manufacturing methods present relatively high production costs.

### DISCLOSURE OF INVENTION

It is the object of the present invention to provide a manufacturing method of a magnet for an air flow rate adjustment valve in an internal combustion engine, the manufacturing method of which is free from the above-described drawbacks and, specifically, is easy and cost-effective to implement.

According to the present invention, a manufacturing method of a shaft provided with a magnet for an air flow rate adjustment valve in an internal combustion engine is provided as claimed in the accompanying claims.

### BRIEF DESCRIPTION OF THE DRAWINGS

The present invention will now be described with reference to the accompanying drawings which illustrate a non-limitative example of embodiment thereof, in which:
- figure 1 is a frontal, diagrammatic view of a butterfly valve for an internal combustion engine with parts removed for clarity; and
- figure 2 is a partially sectioned, side view of a shaft of the butterfly valve shaft in figure 1 made according to the manufacturing method object of the present invention;

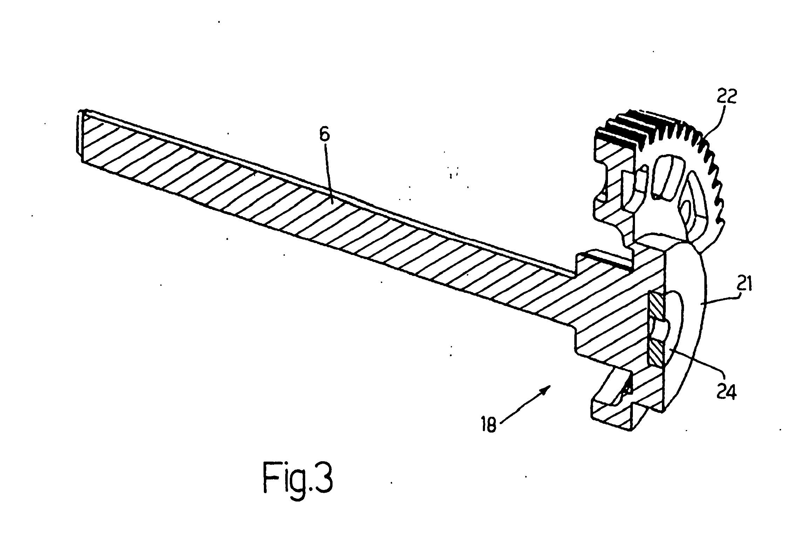

- figure 3 is a perspective, diagrammatic section view of the shaft in figure 2; and
- figure 4 is a perspective, diagrammatic view of a step of manufacturing of the shaft in figure 2, that is not comprised in the present invention.

### PREFERRED EMBODIMENTS OF THE INVENTION

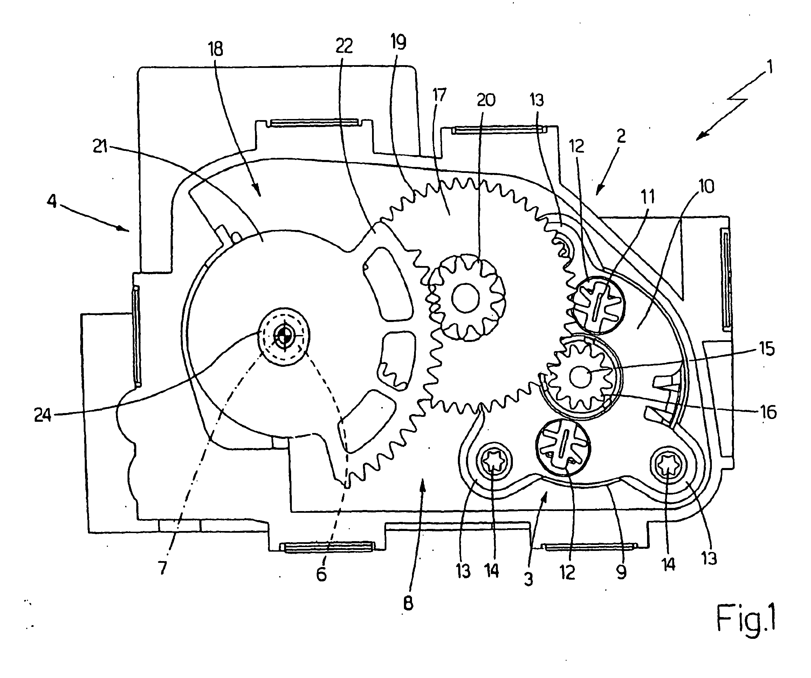

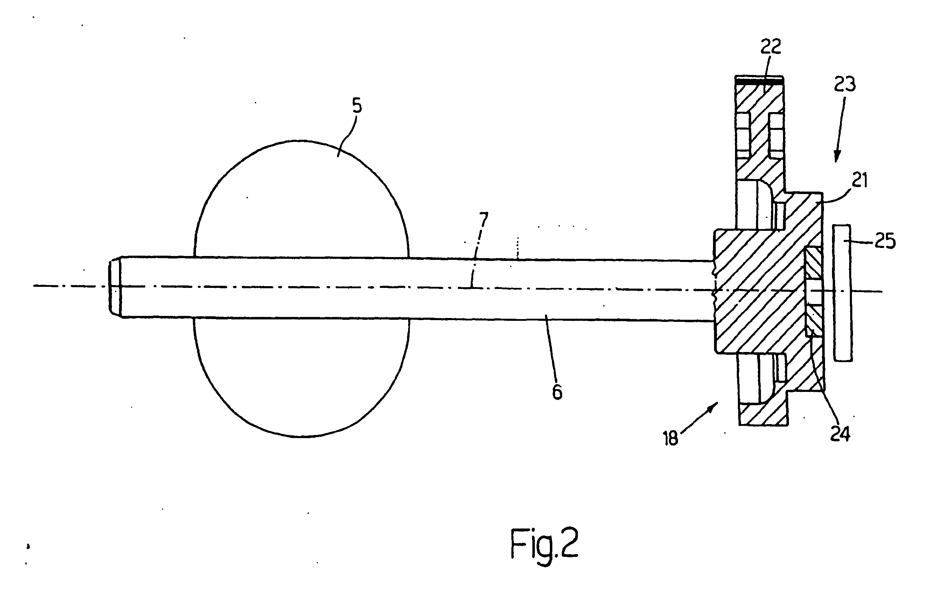

In figure 1, numeral 1 indicates as a whole a butterfly valve for an internal combustion engine (not shown). Butterfly valve 1 comprises a valve body 2 accommodating an electric motor 3 and in which a valve seat 4 is obtained which is engaged by a butterfly valve plate 5 (shown in figure 2), which is displaced between an opening position and a closing position of the valve seat 4 by effect of the action of electric motor 3. Specifically, butterfly valve 5 is keyed on a shaft 6 presenting a longitudinal rotation axis 7 and the closing position by effect of the action of electric motor 3 is mechanically coupled to shaft 6 itself by means of a gear drive 8.

Electric motor 3 presents a cylindrical body 9, which is delimited at its base by a metallic plate 10 provided with a pair of through holes (not shown) crossed by two electric wires 11 which supply electric energy to electric motor 3; a corresponding insulating bushing 12 is arranged between each electric wire 11 and the corresponding hole (not shown) in plate 10. The main function of plate 10 is to allow the fixing of electric motor 3 to valve body 2; for this purpose, plate 10 presents three perforated radial appendixes 13, through which the corresponding fastening screws 14 to the valve body 2 pass.

Electric motor 3 presents a shaft 15 ending with a toothed wheel 16, which is mechanically connected to shaft 6 by means of an idle toothed wheel 17 interposed between toothed wheel 16 and an end gear 18 integral with shaft 6. Toothed wheel 17 presents a first set of teeth 19 coupled to toothed wheel 16 and a second set of teeth 20 coupled to end gear 18; the diameter of the first set of teeth 19 is different from the diameter of the second set of teeth 20, thus toothed wheel 17 determines a non-unitary transmission ratio. End gear 18 is defined by a full cylindrical central body 21 integral with shaft 6 and provided with a circular crown portion 22 presenting a series of teeth coupled to toothed wheel 17. The entire geared drive 8, i.e. toothed wheel 16, toothed wheel 17 and end gear 18, is normally formed by plastic material.

As shown in figures 1 and 2, butterfly valve 1 comprises a position sensor 23, which is coupled to shaft 6 and which is adapted to detect the angular position of butterfly plate 5. Position sensor 23 is of the contactless magnetic type and consists of a magnet 24 integral with shaft 6 and a reading device 25 arranged facing magnet 24 for reading the angular position of magnet 24. Specifically, magnet 24 presents a circular shape and is at least partially embedded in full cylindrical central body 21 of end gear 18. As shown in the accompanying figures, magnet 24 is partially embedded within cylindrical central body 21 of end gear 18, i.e. a base wall of magnet 24 is in view and thus not covered by cylindrical central body 21; according to a different embodiment (not shown) that is not part of the present invention, magnet 24 is completely embedded within cylindrical central body 21 of end gear 18, i.e. magnet 24 is completely concealed inside cylindrical central body 21.

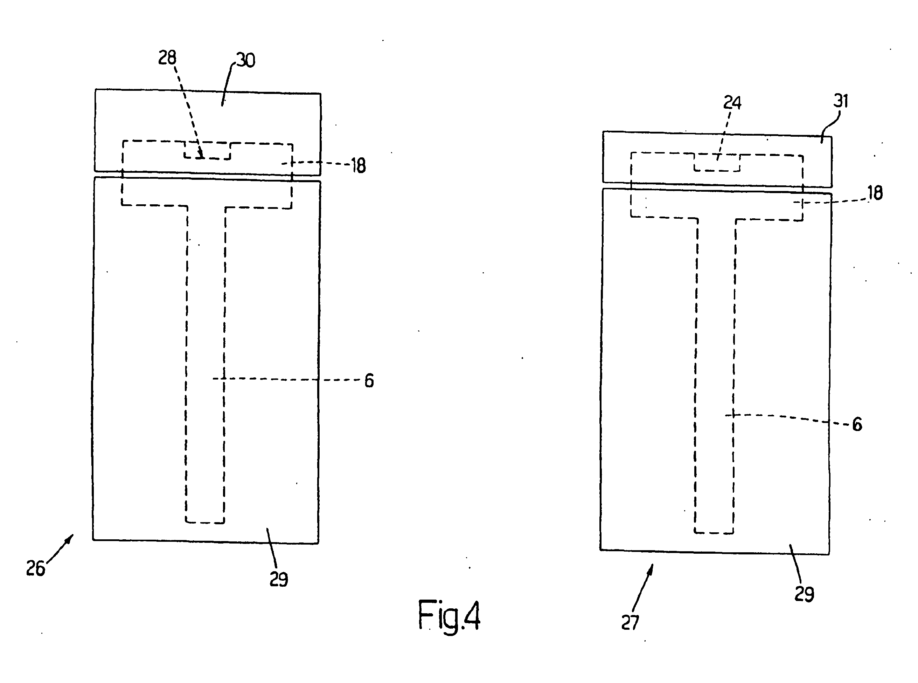

As shown in figure 4, shaft 6 and end gear 18 are formed together by plastic material (technopolymers) by injection; consequently, shaft 6 and end gear 18 are monolithic, i.e. seamlessly formed by a same material. The manufacturing of shaft 6 and end gear 18 contemplates the use of a first mold 26, which negatively reproduces the shape of shaft 6 and of end gear 18 and in which molten plastic material is injected to form shaft 6 and end gear 18. First mold 26 is shaped so as to define a circular seat or cavity 28 in end gear 18 intended to later accommodate magnet 24 of position sensor 23.

Subsequently, shaft 6 and end gear 18 (or only end gear 18) are at least partially inserted in a second mold 27, which negatively reproduces the shape of magnet 24 of position sensor 23 and in which a molten magnetic polymer (e.g. neodymium polymer) is injected to form magnet 24. Obviously, second cavity 27 embraces (surrounds) circular seat or cavity 28 intended to accommodate magnet 24 of position sensor 23. The magnetic polymer consists of small magnetic metallic material particles (powder) and a plastic binding matrix; in order to inject the magnetic polymer, the plastic bounding matrix is molten, while the small magnetic metallic material particles (powder) remain solid and suspended in the molten plastic matrix.

According to a preferred embodiment, the injection of the molten magnetic polymer for forming magnet 24 is performed radially (i.e. perpendicularly to longitudinal rotation axis 7) from at least two different injection points symmetrically arranged about longitudinal rotation axis 7 and positioned on the external perimeter of seat 28 for magnet 24 in order to optimize the position of the plastic material flow seam line by forcing it into the volume of magnet 24. In other words, the molten magnetic polymer is injected along a radial direction from at least two different injection points for forming magnet 24; the number of injection points is at least equal to two and more generally is comprised between two and four. In virtue of the use of a radial injection from several different invention points of the molten magnetic polymer from several different injection points, the seam lines of magnet 24 are arranged inside magnet 24 and thus magnet 24 itself is particularly homogenous; in virtue of the considerable homogeneousness of the injected material, the magnetic field flux lines generated by magnet 24 after magnetizing are uniform and thus the reading of position sensor 23 is very accurate.

Finally, magnet 24 is magnetized by arranging magnet 24 inside an appropriately oriented field and varying the intensity of the magnetic field so as to make magnet 24 perform a hysteresis cycle. Normally, magnet 24 is magnetized after the injection of magnet 24 itself; alternatively, magnet 24 could be magnetized during the injection, for example by providing second mold 27 with a coil in which an electric current passes in use.

According to a possible embodiment, two molds 26 and 27 present a common part 29 (i.e. which is used for both molds 26 and 27) and two corresponding characteristic parts 30 and 31 (i.e. proper of each mold 26 and 27). In other words, first mold 26 consists of a common part 29 and proper characteristic part 30, while second mold 27 consists of common part 29 and proper characteristic part 31.

In other words, shaft 6, end gear 18 and magnet 24 are manufactured by means of a two-step injection or sequential injection of a plastic material forming shaft 6 and end gear 18 and a magnetic polymer forming magnet 24.

In the above-described manufacturing method, shaft 6 is firstly made along with end gear 18 and magnet 24 is made later; according to a different embodiment, magnet 24 may be made first and end gear 18 later.

The above-described manufacturing method of shaft 6, end gear 18 and magnet 24 is particularly advantageous because it allows to contain manufacturing times and costs and concurrently to obtain a highly integrated component and a considerable manufacturing precision, specifically in the positioning of magnet 24 with respect to shaft 6. Specifically, the containment of manufacturing times and costs is obtained in virtue of the fact that the above-described manufacturing method of shaft 6, end gear 18 and magnet 24 may be simply and completely automated.

The above-described manufacturing method may obviously be used to make a shaft-magnetic rotor set for any type of air flow rate adjustment valve for an internal combustion engine; for example, such manufacturing method could be used to make a shaft-magnetic rotor set of a choking valve of a swirl system or a tumble system for an intake manifold of an internal combustion engine.

## Claims

1. A manufacturing method of a shaft (6) provided with a magnet (24) for an air flow rate adjustment valve (1) in an internal combustion engine; the method comprises the steps of:
arranging a first mold (26) which negatively reproduces the shape of the shaft (6) and determines the formation of a seat (28) for the magnet (24);
injecting a molten plastic material inside the mold (26) in order to form the shaft (6) provided with the seat (28) for the magnet (24) by injection molding;
arranging a second mold (27) which surrounds the seat (28) for the magnet (24); and
injecting a molten magnetic polymer in the second mold (27) for forming the magnet (24) by injection molding;
wherein the injection of the molten magnetic polymer for forming the magnet (24) is performed radially, i.e. perpendicularly to a longitudinal rotation axis (7) of the shaft (6), from at least two different injection points that are symmetrically arranged about the longitudinal rotation axis (7) of the shaft (6).

2. A method according to claim 1, wherein the injection points are positioned on the external perimeter of the seat (28) for the magnet (24).

3. A method according to claim 1 or 2, wherein the number of injection points is comprised between two and four.

4. A method according to claim 1, 2 or 3, and comprising the further step of magnetizing the magnet (24) by arranging the magnet (24) inside an appropriately oriented magnetic field and by varying the intensity of the magnetic field so as to make the magnet (24) perform at least one hysteresis cycle.

5. A method according to claim 4, wherein the magnet (24) is magnetized at the end of the molten magnetic polymer casting.

6. A method according to claim 4, wherein the magnet (24) is magnetized during the molten magnetic polymer casting.

7. A method according to one of the claims from 1 to 6, wherein the shaft (6) is provided with an end gear (18), which is defined by a cylindrical central body (21) integral with the shaft (6) and provided with at least one circular crown portion (22) presenting a series of coupled teeth; magnet (24) is at least partially embedded in the cylindrical central body (21) of the end gear (18).

8. A method according to one of the claims from 1 to 7, wherein the magnet (24) constitutes the rotating part of a position sensor (23) of contactless magnetic type adapted to read the angular position of shaft (6).

9. A method according to one of the claims from 1 to 8, wherein the two molds (26, 27) present a common part (29) and two corresponding characteristic parts (30, 31),

## Patentansprüche

1. Herstellungsverfahren einer mit einem Magneten (24) versehenen Welle (6) für ein durchflussregelndes Ventil (1) in einem Verbrennungsmotor; das Verfahren umfasst die Schritte:
Anordnen einer ersten Form (26), die die Form der Welle (6) negativ reproduziert und die Bildung eines Sitzes (28) für den Magneten (24) bestimmt;
Einspritzen eines geschmolzenen Kunststoffmaterials im Inneren der Form (26), um die mit dem Sitz (28) für den Magneten (24) versehene Welle (6) durch Spritzgießen zu bilden;
Anordnen einer zweiten Form (27), die den Sitz (28) für den Magneten (24) umgibt; und Einspritzen eines geschmolzenen magnetischen Polymers in die zweite Form (27) zum Bilden des Magneten (24) durch Spritzgießen;
wobei das Einspritzen des geschmolzenen magnetischen Polymers zum Bilden des Magneten (24) radial ausgeführt wird, d. h. senkrecht zu einer längslaufenden Rotationsachse (7) der Welle (6) von mindestens zwei unterschiedlichen Einspritzpunkten, die symmetrisch um die längslaufende Rotationsachse (7) der Welle (6) angeordnet sind.

2. Verfahren nach Anspruch 1, wobei die Einspritzpunkte auf dem Außenumfang des Sitzes (28) für den Magneten (24) positioniert sind.

3. Verfahren nach Anspruch 1 oder 2, wobei die Anzahl Einspritzpunkte zwischen zwei und vier umfasst.

4. Verfahren nach Anspruch 1, 2 oder 3, und überdies umfassend den weiteren Schritt des Magnetisierens des Magneten (24) durch Anordnen des Magneten (24) im Innern eines passend ausgerichteten magnetischen Felds und durch Verändern der Intensität des magnetischen Felds, damit der Magnet (24) mindestens eine Hystereseschleife durchläuft.

5. Verfahren nach Anspruch 4, wobei der Magnet (24) am Ende des Gießens des geschmolzenen magnetischen Polymers magnetisiert wird.

6. Verfahren nach Anspruch 4, wobei der Magnet (24) während des Gießens des geschmolzenen magnetischen Polymers magnetisiert wird.

7. Verfahren nach einem der Ansprüche 1 bis 6, wobei die Welle (6) mit einem Endzahnrad (18) versehen ist, das durch einen zylindrischen Mittelkörper (21) bestimmt ist, der ein Bauteil mit der Welle (6) bildet und mit mindestens einem kreisförmigen Kronenabschnitt (22) versehen ist, der eine Reihe verbundener Zähne aufweist; der Magnet (24) ist mindestens teilweise in den zylindrischen Mittelkörper (21) des Endzahnrads eingebettet.

8. Verfahren nach einem der Ansprüche 1 bis 7, wobei der Magnet (24) den Drehteil eines Positionssensors (23) des kontaktlosen magnetischen Typs darstellt, der angepasst ist, die Winkelposition der Welle (6) zu lesen.

9. Verfahren nach einem der Ansprüche 1 bis 8, wobei die zwei Formen (26, 27) einen gemeinsamen Teil (29) und zwei entsprechende charakteristische Teile (30, 31) aufweisen.

## Revendications

1. Procédé de fabrication d'un arbre (6) muni d'un aimant (24) pour une soupape de réglage du débit d'air (1) dans un moteur à combustion interne, le procédé comprenant les étapes consistant à :
disposer un premier moule (26) reproduisant en négatif la forme de l'arbre (6) et déterminant la formation d'un siège (28) pour l'aimant (24) ;
injecter un matériau plastique fondu à l'intérieur du moule (26) afin de former l'arbre (6) muni du siège (28) pour l'aimant (24), par moulage par injection ;
disposer un second moule (27) entourant le siège (28) pour l'aimant (24) ; et
injecter un polymère magnétique fondu dans le second moule (27) pour former l'aimant (24), par moulage par injection ;
dans lequel l'injection du polymère magnétique fondu pour former l'aimant (24) est exécutée radialement, c'est-à-dire perpendiculairement à un axe de rotation longitudinal (7) de l'arbre (6), à partir d'au moins deux points d'injection différents disposés de façon symétrique autour de l'axe de rotation longitudinal (7) de l'arbre (6).

2. Procédé selon la revendication 1, dans lequel les points d'injection sont placés sur le périmètre extérieur du siège (28) pour l'aimant (24).

3. Procédé selon la revendication 1 ou 2, dans lequel le nombre de points d'injection est compris entre deux et quatre.

4. Procédé selon la revendication 1, 2 ou 3, comprenant en outre l'étape consistant à magnétiser l'aimant (24) en disposant l'aimant (24) à l'intérieur d'un champ magnétique orienté de façon appropriée et en faisant varier l'intensité du champ magnétique de manière à faire effectuer au moins un cycle d'hystérésis à l'aimant (24).

5. Procédé selon la revendication 4, dans lequel l'aimant (24) est magnétisé à la fin du coulage du polymère magnétique fondu.

6. Procédé selon la revendication 4, dans lequel l'aimant (24) est magnétisé pendant le coulage du polymère magnétique fondu.

7. Procédé selon l'une des revendications 1 à 6, dans lequel l'arbre (6) est muni d'un engrenage d'extrémité (18) défini par un corps central cylindrique (21) d'une seule pièce avec l'arbre (6) et muni d'au moins une partie de couronne circulaire (22) présentant une série de dents couplées ; l'aimant (24) est au moins partiellement intégré dans le corps central cylindrique (21) de l'engrenage d'extrémité (18).

8. Procédé selon l'une des revendications 1 à 7, dans lequel l'aimant 24 constitue la partie rotative d'un détecteur de position (23) de type magnétique sans contact, conçu pour lire la position angulaire de l'arbre (6).

9. Procédé selon l'une des revendications 1 à 8, dans lequel les deux moules (26, 27) présentent une partie commune (29) et deux parties caractéristiques correspondantes (30, 31).
